# EUROPÄISCHE PATENTSCHRIFT

(11) **EP 0 465 840 B1**
(45) Veröffentlichungstag und Bekanntmachung des Hinweises auf die Patenterteilung: **02.11.1994**
(21) Anmeldenummer: 91109386.2
(22) Anmeldetag: 07.06.1991
(51) Int. Cl.: B01D 29/05, B01D 29/64, B01D 29/96

(54) **Filtriereinrichtung, insbesondere für die Abtrennung von Grobpartikeln aus einer Schmiermittel-Suspension, und deren Verwendung**
Filtering device, especially for the separation of coarse particles from a lubricant suspension and use thereof
Dispositif de filtration, notamment pour la séparation de grosses particules d'une suspension de lubrifiant et leur utilisation

(30) Priorität: 10.07.1990 CH 2297/90
(43) Veröffentlichungstag der Anmeldung: 15.01.1992
(73) Patentinhaber: LONZA AG, CH-4002 Basel (CH)
(72) Erfinder: Furrer, Hansjörg, CH-4417 Ziefen (CH)
(74) Vertreter: Keller, René, Dr.

(56) Entgegenhaltungen:
- CH-A- 558 669
- US-A- 1 475 577
- US-A- 2 841 287

## Beschreibung

Die Erfindung betrifft eine Filtriereinrichtung, insbesondere für die Abtrennung von Grobpartikeln aus einer Schmiermittel-Suspension gemäss dem Oberbegriff des Patentanspruchs 1 und eine Verwendung der Einrichtung in einer Anlage zum intervallweisen Versprühen von Flüssigkeit, insbesondere einer unter hohem Druck zu versprühenden Schmiermittel-Suspension.

Eine Filtriereinrichtung dieser Art ist aus der DE-C-28 23 092 bekannt. Die bekannte Einrichtung hat ein aus einem Kopfteil, einem zylindrischen Mittelteil und einem Fussteil bestehendes Gehäuse. Der Kopfteil besitzt einen Einlass für die zu filtrierende Suspension, der Fussteil einen Filtrat-Auslass. Im zylindrischen Mittelteil ist ein zylindrischer Rundfilterkorb angeordnet. Eine von einem Motor angetriebene Rotorwelle erstreckt sich durch den Kopf- und Mittelteil bis in den Fussteil hinein. Sie trägt im Mittelteil Abstreiferlamellen (Reinigungslamellen), welche die sich auf dem Filter absetzenden Feststoffe von diesem abstreifen. Im Fussteil ist ferner eine Sumpfkammer für die vom Filterkorb abgestreiften Grobpartikel (Filterkuchenpartikel) ausgebildet, die einen Sumpf-Auslass hat, und in der am unteren Ende des Rotors vorgesehene Rührblätter rotieren, um die Grobpartikel in der Schwebe zu halten.

Zum Warten der Einrichtung, namentlich zur Säuberung des Filterkorbes, musste der Gehäusekopf vom Mittelteil gelöst und zusammen mit dem gesamten schweren Aufbau, bestehend aus dem Motor, der Rotorwelle und dem Rotor mit den Lamellen sowie allen übrigen an der Rotorwelle befestigten Teilen und dem Filterkorb aus dem Mittel- und Fussteil herausgezogen werden, was aufwendig und mühsam war. Zudem setzten sich an den Lamellen bzw. zwischen ihnen, Feststoffe wie ein Filterkuchen an, der mit zunehmender Grösse den Durchfluss stark beeinträchtigte und schliesslich nahezu gänzlich verunmöglichte. (Im zwischen den Lamellen anwachsenden "Filterkuchen" blieben zunächst noch axiale Durchgangskanäle offen, die sich aber stetig verengten.

Aus der US-A-2,841,287 ist eine Filtervorrichtung bekannt, bei welcher eine flache Siebscheibe durch rotierende Bürsten resp. Schaber kontinuierlich gereinigt wird. Das Filterelement ist zwischen einem, Filtrateinlass, Filtratauslass und Sumpfauslass aufweisenden,Gehäuseteil und einem Deckel festgehalten. Die Bürsten bzw. Schaber sind auf axial verlaufenden Pfosten einer von einem Motor angetriebenen Spinne verschiebbar gelagert. Sie werden mit Hilfe von Spiralfedern gegen die Siebscheibe gedrückt. Das durch den Einlass einströmende Filtrat strömt zwischen der genannten Spinne, den Pfosten und der Bürste resp. dem Schaber weitgehend ungehindert durch.

Aufgabe der Erfindung ist es, die Wartung der Filtriereinrichtung zu erleichtern und die Bildung von filterkuchenartigen Ablagerungen an den Lamellen zu verhindern oder zumindest herabzusetzen.

Die erfindungsgemässe Lösung der Aufgabe ist Gegenstand des Anspruchs 1. Bevorzugte Ausführungsarten sind Gegenstand der Ansprüche 2 bis 9. Die erfindungsgemässe Verwendung der Einrichtung in einer Anlage zum intervallweisen Versprühen von Flüssigkeit, insbesondere einer unter hohem Druck zu versprühenden Schmiermittel-Suspension, ist Gegenstand des Anspruchs 10.

Bei der erfindungsgemässen Einrichtung genügt es für die Säuberung des Filters, den Deckel abzunehmen. Das Filter kann dann ohne weiteres abgenommen und gereinigt oder ausgewechselt werden. Der gesamte übrige Teil der Einrichtung mit dem Rotor und dem den Rotor antreibenden Motor bleibt dabei an seinem Ort. Da das Filter nicht ein zylindrischer Korb, sondern eine flache, ebene Scheibe ist, lässt es sich leicht reinigen.

Ablagerungen der vom Filter abgeschiedenen und von der bzw. den Lamellen abgestreiften Feststoffe (Grobpartikel, Filterkuchen) an der bzw. den Lamellen werden dadurch vermieden, dass der Einlass für die zu filtrierende Suspension im die Lamellen behausenden Gehäuseteil gebildet ist, wobei der Einlass vorzugweise radial zur Rotorachse so nahe vom Filter in den Innenraum des Gehäuseteils mündet, dass die durch den Einlass einströmende Suspension wenigstens teilweise auf die Lamellen gerichtet ist. Die sich auf den Lamellen absetzenden Feststoffe werden demzufolge von der zu filtrierenden Suspension weggewaschen.

Um den sich aus den durch die Lamellen vom Filter abgestreiften Feststoffen bildenden Sumpf abzulassen, hat der Gehäuseteil zweckmässig einen Sumpf-Auslass, der an eine mit einem Absperrorgan ausgerüstete Ablassleitung anzuschliessen ist. Der Sumpf-Auslass ist vorzugsweise diametral dem Einlass gegenüberliegend angeordnet, und zwar derart, dass die Lamellen wenigstens teilweise zwischen Einlass und Sumpfauslass liegen, womit die obige Reinigung der Lamellen unterstützt wird: Beim unter Zufuhr von zu filtrierender Suspension durch den Einlass und vorzugsweise unter laufendem Rotor stattfindenden Ablassen des Sumpfes entsteht eine turbulente Strömung in Richtung auf die Lamellenkanten und -flächen sowie um diese herum, wodurch auf den Lamellen anhaftende Feststoffe weggewaschen werden.

Weitere Vorteile und bevorzugte Eigenschaften der erfindungsgemässen Einrichtung und der erfindungsgemässen Verwendung der Einrichtung ergeben sich aus der nachfolgenden Beschreibung eines Ausführungsbeispiels der Erfindung anhand der Zeichnung.

Es zeigen:
- Fig. 1: einen Achsenlängsschnitt durch eine erfindungsgemässe Filtriereinrichtung, und
- Fig. 2: ein Blockschema der Anordnung der Filtriereinrichtung in einer Anlage zum intervallweisen Versprühen einer unter hohem Druck zu versprühenden Schmiermittel-Suspension.

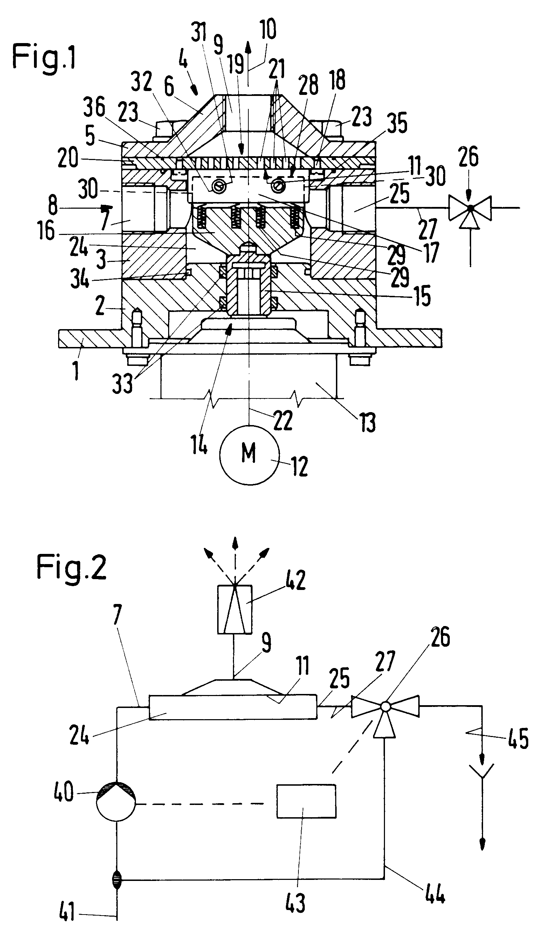

Die dargestellte Filtriereinrichtung dient zur Abtrennung von Grobpartikeln aus einer Schmiermittel-Suspension und lässt sich zum Beispiel in einer Anlage zum intervallweisen Versprühen einer Schmiermittel-Suspension einsetzen, wie sie im (nicht zum Stand der Technik gehörenden) CH-Patentgesuch Nr. 996/90 vom 26. März 1990 der Anmelderin beschrieben und in Fig. 2 schematisch dargestellt ist.

Das Gehäuse der Einrichtung besteht aus einem mit einem Befestigungsflansch 1 versehenen Fussteil 2, einem hohlzylindrischen Mittelteil 3 und einem Deckel 4 mit einem kreisringförmigen Umfangsrand 5 und einem nach oben gewölbten Schalenteil 6. Der Einlass 7 für die zu filtrierende Suspension 8 verläuft radial durch den Mantel des hohlzylindrischen Mittelteils 3, der Auslass 9 für das Filtrat 10 ist im Zentrum des nach oben gewölbten bzw. ausgebauchten Schalenteils 6 des Deckels 4 vorgesehen. Zwischen dem Mittelteil 3 und dem Deckel 4 ist ein Filter 11 angeordnet. Ein Elektro-Motor 12 treibt über ein Getriebe 13 einen Rotor 14 an. Der Rotor 14 hat einen zylindrischen, durch eine axiale Bohrung des Fussteils 2 hindurchgehenden Teil 15 und einen im Mittelteil 3 angeordneten, sich nach oben verbreiternden Trägerteil 16, an dessen Oberseite Abstreiflamellen 17 gelagert sind, welche sich auf dem Filter 11 absetzende Festsstoffe abstreifen.

Das Filter 11 besteht aus einem durch ein kreisförmiges, flaches, ebenes Lochblech mit einer Maschenweite von 0,5 mm gebildeten Sieb. Das scheibenförmige Sieb 11 ist mittels in Abständen entlang seinem Umfangsrand angeordneten Schrauben 18 lösbar an die Unterseite einer kreisförmigen Siebträgerplatte (Filterträgerplatte) 19 geschraubt. Die Siebträgerplatte 19 hat denselben Aussendurchmesser wie der hohlzylindrische Mittelteil 3 und ist mit ihrem ringförmigen Umfangsrand 20 zwischen der oberen Stirnseite des hohlzylindrischen Mittelteils 3 und dem Umfangsrand 5 des Deckels 4 eingeklemmt. Der Aussendurchmesser des Siebs 11 ist um eine Toleranz kleiner als der Innendurchmesser des hohlzylindrischen Mittelteils 3, so dass das Sieb 11 innerhalb des eingeklemmten Umfangsrands 20 der Siebträgerplatte 19 liegt. Die Siebträgerplatte 19 weist im Bereich des Siebs 11 eine Vielzahl von Bohrungen 21 für den Durchtritt des Filtrats 10 auf. Sie dient als Stützplatte für das Sieb 11, ist senkrecht zur Rotorachse 22 angeordnet und gewährleistet, dass das dünne, biegsame Sieb 11 auch bei den hohen herrschenden Eingangsdrücken von z.B. 80 bar plan bleibt und senkrecht zur Rotorachse 22 gehalten ist.

Der Deckel 4 ist mit durch (in der Zeichnung nicht sichtbare) Löcher im Umfangsrand 20 des Siebträgers 19 und (nicht sichtbare) Bohrungen im Mittelteil 3 hindurchgreifenden Schrauben am Fussteil 2 befestigt, so dass er rasch abgeschraubt und der Siebträger 19 zwecks Reinigung oder Auswechslung des Siebs 11 vom Mittelteil 3 abgenommen werden kann. Erforderlichenfalls kann dabei auch noch der Mittelteil 3 vom Fussteil 2 zwecks Wartung des Rotors 14 (z.B. Ersetzen abgenutzter Lamellen 17) abgenommen werden.

Der radial zur Rotorachse 22 in den Innenraum 24 des hohlzylindrischen Mittelteils 3 mündende Einlass 7 ist möglichst nahe an der oberen Stirnseite des Mittelteils 3 und damit dem Sieb 11 angeordnet. Der Abstand des Einlasses 7 von der oberen Stirnseite ist dabei nur so gross gewählt, wie dies nötig ist, damit der Teil der Wandung des Mittelteils 3, der wegen der Befestigungschrauben 18 des Siebs 11 eine Aussparung hat, noch genügend stabil ist. Infolge dieses (nur aus Materialfestigkeitsgründen) notwendigen Abstands ist der Einlass 7 gegenüber den Lamellen 17 axial etwas nach unten versetzt. Wegen der Versetzung ist die durch den Einlass 7 einströmende Suspension 8 nicht - wie das an sich für die Funktion am besten wäre - auf die ganzen Lamellen 17, sondern nur auf deren untere Hälfte gerichtet, was aber, wie Versuche gezeigt haben, für die angestrebte Wirkung, nämlich das Wegwaschen von sich auf den Lamellen 17 absetzenden Feststoffen, noch ausreicht.

Dem Einlass 7 diametral gegenüber liegt ein Sumpf-Auslass 25, der ebenso wie der Einlass 7 radial zur Rotorachse 22 durch den Mantel des hohlzylindrischen Gehäuseteils 3 verläuft. Der Sumpf-Auslass 25 ist an eine mit einem als Dreiwegeventil ausgebildeten Absperrorgan 26 ausgerüstete Ablass- oder Abflussleitung 27 zum Ablassen des sich aus den durch die Lamellen 17 vom Sieb 11 abgestreiften Feststoffen bildenden Sumpfs angeschlossen. (Der Zweck des Dreiwegeventils 26 wird weiter unten im Zusammenhang mit der Verwendung der Filtriereinrichtung erläutert). Da die unteren Hälften der Lamellen 17 zwischen dem Einlass 7 und dem Sumpf-Auslass 25 liegen, tritt beim unter Zufuhr von zu filtrierender Suspension 8 durch den Einlass 7 und vorzugsweise unter laufendem Rotor 14 stattfindendem Ablassen des Sumpfes eine turbulente Strömung um die Lamellen 17 auf, durch die auf den Lamellen 17 anhaftende Feststoffe weggewaschen werden. Infolge der zur Rotorachse 22 diametralen Strömungsrichtung zwischen Ein- und Auslass 7, 25 und dem Rotieren der Lamellen 17 trifft die Eingangsströmung dabei je nach Rotationsstellung unter verschiedenen Winkeln auf die Lamellen 17: Parallel zur jeweils am Einlass 7 liegenden Lamelle 17 auf dessen Kante, wobei sie in die weiter unten beschriebenen Schlitze 28 des Trägerteils 16 eindringt und diese auswäscht; beim Weiterrotieren dann unter zunehmendem und nach Ueberschreiten des rechten Winkels wieder abnehmendem spitzen Winkel schräg auf die über die Schlitze 28 vorstehenden Teile der Lamelle 17, wobei besonders durch die im ersteren Fall parallel in die Schlitze 28 eindringende Strömung eine hohe Reinigungswirkung erzielt wird.

Die Abstreiferlamellen 17 bestehen aus rechteckigen Polyäthylen-Platten und sind axial verschiebbar in radialen Schlitzen 28 an der Oberseite des sich nach oben verbreiternden Trägerteils 16 des Rotors 14 gelagert und durch in Bohrungen des Trägerteils angeordnete Druckfedern 29 in Richtung auf das Sieb 11 gedrückt. Sie stehen axial und radial über die durch die Schlitzwände 30 gebildeten Führungsflächen vor. Für jede Lamelle 17 ist durch die Schlitzwände 30 ein Stift (Stellschraube) 31 geschraubt, dessen zwischen den Führungsflächen 30 liegender Teil durch ein grösser als der Stiftdurchmesser bemessenes Loch 32 der Lamelle 17 greift und als Anschlag die Verschiebung der Lamelle 17 durch die Druckfedern 29 begrenzt, damit die Lamelle 17 beim Wegnehmen des Siebträgers 19 zwecks Reinigung oder Auswechslung des Siebs 11 am Rotorteil 16 gehalten bleibt. Je nach dem Mass, in dem sich der Filterkuchen bildet, können nur eine oder mehrere sternförmig in gleichen Winkelabständen voneinander angeordnete Lamellen 17 vorgesehen sein, wobei eine entsprechende Anzahl Schlitze im Rotorkopfteil vorzusehen ist. Zwei bis vier Lamellen 17 haben sich für die vorliegende Anwendung als besonders zweckmässig erwiesen.

Der Einlass 7 und die Auslässe 9, 25 sind mit Anschlussgewinden zum Anschliessen von Anschlussleitungen versehen.

Zur Abdichtung des von der Flüssigkeit durchströmten Innenraums 24 des hohlzylindrischen Mittelteils 3 und des Deckelinnenraums ist der Fussteil 2 durch zwei Wellendichtungen 33 am Rotorteil 15 und einen O-Ring 34 am Mittelteil 3 sowie der letztere durch einen O-Ring 35 am Umfangsrand 20 der Siebträgerplatte 19 und dieser (20) seinerseits durch einen O-Ring 36 am Umrangsrand 5 des Deckels 4 abgedichtet.

Die Filtriereinrichtung kann in einer Anlage zum intervallweisen Versprühen einer unter hohem Druck zu versprühenden Schmiermittel-Suspension wie im folgenden anahnd von Fig. 2 beschrieben, verwendet werden:
Die Schmiermittel-Suspension wird durch eine Pumpe 40 über eine Saugleitung 41 angesaugt und zwecks Abtrennung von Grobpartikeln durch den Einlass 7 in die Filtriereinrichtung gepumpt, deren Auslass 9 mit einer nach Art eines Ueberdruckventils bei einem einen Schwellwertdruck überschreitenden Eingangsdruck (der Schmiermittel-Suspension) selbsttätig öffnenden und bei Unterschreiten des Schwellwertdrucks selbsttätig schliessenden Sprühdüse 42 verbunden ist.

Der Ausgangsdruck der Pumpe 42 wird durch eine Steuereinrichtung 43 in den Pausen zwischen den Sprühintervallen auf einem Pausendruck gehalten, zum Versprühen der Flüssigkeit auf den Sprühdruck erhöht und am Ende des Sprühintervalls wieder auf den Pausendruck abgesenkt, wobei der Pausendruck so bemessen ist, dass er gerade noch nicht zum Oeffnen der Sprühdüse 42 ausreicht.

Am Ende des Sprühintervalls wird das Dreiwegeventil 26, gesteuert durch die Steuereinrichtung 43, geöffnet (und vor Beginn des nächsten Sprühintervalls wieder geschlossen), wobei der Innenraum 24 der Filtriereinrichtung diametral zur Rotorachse 22 durchflutet und die Lamellen 17 und das Filtersieb 11 dadurch gereinigt sowie die im Innenraum 24 befindlichen Grobpartikel (Filterkuchenteile) durch die Ablassleitung 27 weggeschwemmt werden.

Die Abflussleitung 27 kann mit Hilfe des Dreiwegeventils 26 wahlweise mit einer Rückführleitung 44 zur Pumpe 40 oder einem Abwasserkanal 45 verbunden werden. Bei geringem Grobpartikelgehalt der Suspension wird die Abflussleitung 27 jeweils mit der Rückführleitung 44 zur Pumpe 40 verbunden, wobei die abgeführten Grobpartikel wieder über die Pumpe 40 und den Einlass 7 in die Filtriereinrichtung zurückgeführt werden, der Sumpf also nicht endgültig entfernt wird, aber durch das diametrale Durchfluten des Raums 24 auf und um die Lamellen 17 diese jeweils gereinigt werden. Mit dem Abwasserkanal 45 wird die Abflussleitung 27 in diesem Fall nur selten verbunden, nämlich erst dann, wenn sich eine hohe Grobpartikelkonzentration (ein Grobpartikelsumpf) im Raum 24 gebildet hat. Diese seltene Verbindung mit dem Abwasserkanal 38 kann mittels der das Dreiwegeventil 26 steuernden Steuereinrichtung 43 automatisch jeweils nach einer bestimmten Anzahl Oeffnungen des Ventils 26 oder durch manuelles Betätigen des Mehrwegeventils 26 erfolgen.

Bei hohem Grobpartikelgehalt der Suspension wird das Mehrwegeventil 26 entsprechend häufiger mit dem Abwasserkanal 45 verbunden, damit die Grobpartikel endgültig weggeführt werden, wobei ein zu häufiges Oeffnen des Ventils 26 natürlich nicht angestrebt wird, da jeweils nicht nur die unerwünschten Grobpartikel, sondern auch (wertvolles) Schmiermittel mit abgeführt wird.

Infolge der einander gegenüberliegenden Anordnung des Einlasses 7 und Auslasses 25 mit den dazwischenliegenden Lamellen 17 und dem häufigen Oeffnen des Ventils 26 (in die Leitung 44 oder 45) wird, wie erwähnt, eine Reinigung der Lamellen 17 namentlich durch die in die Schlitze 28 eindringende und die aus diesen vorstehenden Lamellenteile prallende Strömung sowie die entstehenden Turbulenzen erreicht, die bei dem hohen Anfangsdruck am Eingang 7 sehr wirksam ist. Dabei nimmt der Druck im Raum 24 beim Oeffnen des Ventils 26 fast schlagartig ab, so dass ein Druckstoss entsteht, wodurch die Turbulenzen und damit die Reinigungswirkungen noch verstärkt werden. Der Rotor 14 mit den Lamellen 17 wird dabei durch den Motor 12 weiter rotiert, so dass die reinigende Strömung alle Lamellen 17 in verschiedenen Lagen erfasst, d.h. je nach Lamellenstellung unter verschiedenen Winkeln auf die Lamellen wirkt, was ebenfalls zur hohen Reinigungswirkung beiträgt. Der Druckstoss, und damit die Reinigungswirkung, erfasst schliesslich nicht nur die Lamellen 17, sondern auch das Sieb 11: Durch das schlagartige Durchfluten des Raums 24 parallel zum Sieb 11 streicht die Flüssigkeit dem Sieb 11 entlang und wäscht ggf. darauf befindliche, von den Lamellen 17 nicht abgestreifte Partikel, weg.

## Patentansprüche

1. Filtriereinrichtung, insbesondere für die Abtrennung von Grobpartikeln aus einer Schmiermittel-Suspension, mit einem einen Einlass (7) für die zu filtrierende Suspension (8) und einen Filtrat-Auslass (9) aufweisenden Gehäuse (2, 3, 4), in dem ein Filter (11) und mindestens ein eine Abstreifvorrichtung (17) zum Abstreifen der sich auf dem Filter (11) absetzenden Feststoffe aufweisender Rotor (14) angeordnet sind, wobei das Filter (11) durch ein senkrecht zur Rotorachse (22) angeordnetes, flaches, ebenes Filtermittel (11) gebildet ist, das zwischen einem den Einlass (7) für die zu filtrierende Suspension (8) aufweisenden, die Abstreifvorrichtung (17) behausenden Gehäuseteil (3) und einem lösbar an diesem angebrachten Gehäusedeckel (4) angeordnet ist, so dass es nach Abnehmen des Gehäusedeckels (4) reinig- und auswechselbar ist, dadurch gekennzeichnet, dass der Filtrat-Auslass im Gehäusedeckel angeordnet ist, dass die Abstreifvorrichtung durch eine Lamelle gebildet ist und dass der Einlass (7) so nahe vom Filter (11) in den Innenraum (24) des Gehäuseteils (3) mündet, dass die durch den Einlass (7) einströmende Suspension (8) wenigstens teilweise auf die Lamelle oder Lamellen (17) gerichtet ist, damit sich auf der bzw. den Lamellen (17) absetzende Feststoffe weggewaschen werden.

2. Filtriereinrichtung nach Anspruch 1, dadurch gekennzeichnet, dass der Einlass (7) wenigstens annähernd radial zur Rotorachse (22) in den Innenraum (24) des Gehäuseteils (3) mündet.

3. Filtriereinrichtung nach einem der Ansprüche 1 bis 2, dadurch gekennzeichnet, dass der Gehäuseteil (3) einen Sumpf-Auslass (25) aufweist, der an eine mit einem Absperrorgan (26) ausgerüstete Ablassleitung (27) zum Ablassen der sich aus den durch die Lamelle bzw. Lamellen (17) vom Filter (11) abgestreiften Feststoffen bildenden Sumpfs anzuschliessen ist.

4. Filtriereinrichtung nach einem der Ansprüche 1-3, dadurch gekennzeichnet, dass der Einlass (7) und der Sumpf-Auslass (25) einander gegenüberliegend so angeordnet sind, dass die Lamelle bzw. Lamellen (17) wenigstens teilweise zwischen dem Einlass (7) und dem Sumpf-Auslass (25) liegen, damit beim unter Zufuhr von zu filtrierender Suspension (8) durch den Einlass (7) und vorzugsweise unter laufendem Rotor (14) stattfindenden Ablassen des Sumpfes eine turbulente Strömung um die Lamelle bzw. Lamellen (17) auftritt, durch die auf der bzw. den Lamellen (17) anhaftende Feststoffe weggewaschen werden.

5. Filtriereinrichtung nach einem der Ansprüche 1 bis 4, dadurch gekennzeichnet, dass das vorzugsweise durch ein Sieb gebildete Filter (11) lösbar auf einem mit Oeffnungen (21) versehenen Filterträger (19) befestigt ist, der zwischen dem Gehäuseteil (3) und dem Gehäusedeckel (4) angeordnet ist.

6. Filtriereinrichtung nach einem der Ansprüche 1 bis 5, dadurch gekennzeichnet, dass der Gehäusedeckel (4) mittels durch das Filter (11) und/oder den Filterträger (19) hindurchgeführter Schrauben (23) lösbar am Gehäuse (2, 3) befestigt ist.

7. Filtriereinrichtung nach einem der Ansprüche 1 bis 6, dadurch gekennzeichnet, dass die Lamelle bzw. Lamellen (17) axial verschiebbar zwischen am Rotor (14) vorgesehenen Führungsflächen (30) gelagert und durch Druckfedern (29) in Richtung auf das Filter (11) gedrückt sind, wobei die Lamelle bzw. Lamellen (17) die Führungsflächen (30) wenigstens in axialer Richtung überragen.

8. Filtriereinrichtung nach Anspruch 7, dadurch gekennzeichnet, dass für die bzw. jede Lamelle (17) zwischen den Führungsflächen (30) ein Anschlag (31) vorgesehen ist, der durch ein Loch (32) der Lamelle (17) greift und die Verschiebung der Lamelle (17) durch die Druckfedern (29) begrenzt, damit die Lamelle (17) beim Wegnehmen des Filters (11) zwecks Reinigung oder Auswechslung am Rotor (14) gehalten bleibt.

9. Verwendung der Filtriereinrichtung nach Anspruch 3 oder 4 in einer Anlage zum intervallweisen Versprühen von Flüssigkeit, insbesondere einer unter hohem Druck zu versprühenden Schmiermittel-Suspension, bei der das Filtrat (10) intervallweise versprüht und am Ende jedes Sprühintervalls oder in Zeitabständen jeweils am Ende eines Sprühintervalls das Absperrorgan (26) der an den Sumpf-Auslass (25) angeschlossenen Ablassleitung (27) bei am Einlass (7) unter Druck stehender Suspension (8) geöffnet wird.

## Claims

1. Filtering device, in particular for separating coarse particles from a lubricant suspension, comprising a housing (2, 3, 4) with an inlet (7) for a suspension (8) to be filtered and a filtrate outlet (9), and with a filter (11) and at least one rotor (14) with a scraping device (17) for scraping off solids deposited on the filter (11), in which respect the filter (11) is formed by a flat and plane filtering means (11), which is arranged perpendicularly to the rotor axis (22) and arranged between housing portion (3) which houses the inlet (7) for a suspension (8) to be filtered, a scraping device (17) and a thereto detachably mounted housing cover (4) so as to allow it to be cleaned and exchanged after removal of the housing cover (4), **characterised in that** the filtrate outlet is arranged in the housing cover, that the scraping device is formed by a lamina and that the inlet (7) terminates so close to the filter (11) in the interior (24) of the housing portion (3) that the suspension (8) which flows in through the inlet (7) is at least partially oriented towards the lamina or laminae (17) in order that solids deposited on the lamina(e) are washed off.

2. Filtering device according to claim 1, **characterised in that** the inlet (7) terminates at least approximately radially to the rotor axis (22) in the interior (24) of the housing portion (3).

3. Filtering device according to one of claims 1 to 2, **characterised in that** the housing portion (3) comprises a sump outlet (25) which is to be connected to a discharge pipe (27), which is fitted with a shut-off element (26), for the purpose of discharging solids which have been scraped off the filter (11) by the lamina or laminae (17).

4. Filtering device according to one of claims 1 to 3, **characterised in that** the inlet (7) and the sump outlet (25) are arranged opposite each other so that the lamina or laminae (17) is/are at least partially located between the inlet (7) and the sump outlet (25) in order that during discharging of the sump, which is carried out by delivering suspension (8) to be filtered through the inlet (7) and preferably with the rotor (14) running, a turbulent flow develops around the lamina or laminae (17), by means of which solids adhering to the lamina or laminae (17) are washed away.

5. Filtering device according to one of claims 1 to 4, **characterised in that** a filter (11), which is preferably formed by a sieve, is detachably mounted to a filter carrier (19), which is provided with apertures (21) and placed between the housing portion (3) and the housing cover (4).

6. Filtering device according to one of claims 1 to 5, **characterised in that** the housing cover (4) is mounted to the housing (2, 3) so as to be detachable by means of bolts (23) which pass through the filter (11) and/or the filter support (19).

7. Filtering device according to one of claims 1 to 6, **characterised in that** the lamina or laminae (17) is/are mounted to be axially displaceable between guide surfaces (30) provided on the rotor (14) and pressed by pressure springs (29) in the direction of the filter (11), and that the lamina or laminae (17) extend(s) at least in the axial direction beyond the guide surfaces (30).

8. Filtering device according to claim 7, **characterised in that** an abutment (31) for the or each lamina (17) is provided between the guide surfaces (30), which reaches through an aperture (32) of the lamina (17) and restricts displacement of the lamina (17) by way of pressure springs (29) in order that the lamina (17) is held on the rotor (14) during removal of the filter (11) for cleansing or replacement.

9. Use of the filtering device according to claim 3 or 4 in a unit for interval spraying of a fluid, in particular a lubrication suspension to be sprayed under high pressure, wherein the filtrate (10) is sprayed at intervals, and at the end of each spray interval or time interval at the end of each spraying interval the shut-off element (26) of the discharge pipe (27) which is connected to the sump discharge (25) is opened when the suspension (8) is under pressure at the inlet (7).

## Revendications

1. Dispositif de filtration, en particulier pour la séparation de particules grossières à partir d'une suspension de lubrifiant, comprenant un logement (2, 3, 4) comportant une entrée (7) pour la suspension à filtrer (8) et une sortie à filtrat (9), logement dans lequel sont disposés un filtre (11) et au moins un rotor (14) comprenant un dispositif de raclage (17) pour racler les matières solides qui se sont déposées sur le filtre (11), le filtre (11) formant un moyen de filtration (11) plan, plat et disposé perpendiculairement à l'axe (22) du rotor, lequel est disposé entre une partie de logement (3) contenant le dispositif de raclage (17) et comportant l'entrée (7) pour la suspension (8) à filtrer, et un couvercle (4) monté de façon amovible sur celle-ci, de manière qu'il puisse être démonté, nettoyé et remplacé après retrait du couvercle (4), caractérisé en ce que la sortie à filtrat est prévue dans le couvercle du logement, en ce que le dispositif de raclage est formé par une lamelle et en ce que l'entrée (7) débouche suffisamment près du filtre (11) dans l'espace interne (24) de la partie de logement (3) pour que la suspension (8) qui pénètre par l'entrée (7) soit dirigée au moins en partie sur la lamelle ou les lamelles (17) de manière que les matières solides qui se sont déposées sur la ou les lamelles (17) soient éliminées par lavage.

2. Dispositif de filtration selon la revendication 1, caractérisé en ce que l'entrée (7) débouche au moins approximativement radialement par rapport à l'axe (22) du rotor dans l'espace interne (24) de la partie de logement (3).

3. Dispositif de filtration selon la revendication 1 ou 2, caractérisé en ce que la partie de logement (3) comporte une sortie à boue (25), à laquelle est raccordée une conduite de sortie (27) équipée d'un organe de fermeture (26) pour décharger les matières solides formant la boue et raclées à partir du filtre (11) par la ou les lamelles (17).

4. Dispositif de filtration selon l'une quelconque des revendications 1 à 3, caractérisé en ce que l'entrée (7) et la sortie à boue (25) sont disposées à l'opposé l'une de l'autre, en ce que la ou les lamelles (17) sont situées au moins en partie entre l'entrée (7) et la sortie à boue (25) de manière que se forme un courant turbulent autour de la ou des lamelles (17) lors de l'amenée de la suspension (8) à filtrer par l'entrée (7) et de préférence alors que la sortie de la boue a lieu pendant que tourne le rotor (14), grâce à quoi les matières solides qui adhèrent sur la ou les lamelles (17) sont évacuées par lavage.

5. Dispositif de filtration selon l'une quelconque des revendications 1 à 4, caractérisé en ce que le filtre (11) formé de préférence par un tamis est fixé de façon amovible sur un support de filtre (19) muni d'ouvertures (21), qui est placé entre la partie de logement (3) et le couvercle (4).

6. Dispositif de filtration selon l'une quelconque des revendications 1 à 5, caractérisé en ce que le couvercle (4) est fixé de façon amovible sur le logement (2, 3) au moyen de vis (23) passant à travers le filtre (11) et/ou le support de filtre (19).

7. Dispositif de filtration selon l'une quelconque des revendications 1 à 6, caractérisé en ce que la ou les lamelles (17) sont montées de façon mobile et axialement entre des surfaces de guidage (30) prévues dans le rotor (14) et sont pressées par des ressorts de pression (29) en direction du filtre (11), la ou les lamelles dépassant au mains en direction axiale les surfaces de guidage (30).

8. Dispositif de filtration selon la revendication 7, caractérisé en ce qu'il est prévue une butée (31) pour la ou pour chaque lamelle (17) entre les surfaces de guidage (30), butée qui passe à travers un trou (32) de la lamelle (17) et qui limite le déplacement de la lamelle (17) par les ressorts de pression (29), de manière que la lamelle (127) reste maintenue sur le rotor (14) quand on retire le filtre (11) en vue de son nettoyage ou de son remplacement.

9. Utilisation du dispositif de filtration selon la revendication 3 ou 4 dans une installation de pulvérisation intermittente d'un liquide, notamment d'une suspension de lubrifiant à pulvériser sous une forte pression, caractérisée en ce que le filtrat (10) est pulvérisé par intervalles et en ce qu'à la fin de chaque intervalle de pulvérisation ou à des intervalles de temps suivant un intervalle de pulvérisation, l'organe de fermeture (26) de la conduite de décharge (27) qui est raccordée à la sortie à boue (25) est ouvert quand une suspension (28) sous pression se présente à l'entrée (7).
